# DEMANDE DE BREVET EUROPEEN

(11) **EP 0 957 279 A1**
(43) Date de publication de la demande: **17.11.1999**
(21) Numéro de dépôt: 99401125.2
(22) Date de dépôt: 07.05.1999
(51) Int. Cl.: F16D 23/06

(54) **Dispositif de synchronisation avec ressort d'armement**

(30) Priorité: 15.05.1998 FR 9806147
(71) Demandeur: RENAULT, 92109 Boulogne-Billancourt (FR)
(72) Inventeur: Bertheaume, Pierre, 78290 Croissy sur Seine (FR); Cubaud, Olivier, 95870 Bezons (FR)

(57) **Abrégé**

Dispositif de synchronisation de pignons de boîte de vitesses, comportant un baladeur (4) coulissant sur un moyeu (1), muni de rampes d'armement (6b) repoussant par l'intermédiaire d'un élément d'armement (9) l'un ou l'autre de deux anneaux de synchronisation (2) vers un pignon (3) et de dentures (6) rencontrant la denture (7) de ce pignon après avoir traversé celle d'un anneau, caractérisé en ce que l'élément d'armement (9) présente des bras (11) escamotables vers l'intérieur recevant la poussée des rampes d'armement (6b), une partie centrale (12) reliée auxdits bras de façon à transmettre aux anneaux la poussée reçue par lesdits bras, et des pattes (13) également reliés à la partie centrale (12), qui entraînent simultanément les anneaux non sollicités à l'écart des pignons.

## Description

La présente invention se rapporte à la commande interne des boîtes de vitesses mécaniques.

Elle concerne un dispositif de synchronisation de pignons de boîte de vitesses, comportant un baladeur muni de rampes d'armement repoussant par l'intermédiaire d'un élément d'armement l'un ou l'autre de deux anneaux de synchronisation vers un pignon, et de dentures rencontrant la denture de ce pignon après avoir traversé celle de l'anneau. Cette invention concerne également l'élément ou "ressort d'armement" d'un tel dispositif.

Le ressort d'armement d'un synchroniseur, dont la fonction principale consiste à repousser les anneaux de synchronisation sur les pignons, peut revêtir différentes formes, dépendant notamment de la disposition et de la conformation des rampes d'armement du baladeur.

Le plus souvent, l'élément d'armement est constitué d'un matériau souple, lui permettant de se déformer sous les rampes d'armement du baladeur pour introduire une certaine élasticité dans la commande du synchroniseur, et pour faciliter le retour du dispositif en position de désarmement, lorsque la vitesse est retirée.

Dans de nombreux synchroniseurs connus, les rampes d'armement sont situées au centre du baladeur, et exercent leur poussée sur une partie centrale du ressort d'armement. Par la publication JP 58 137627, on connaît un premier type de ressort d'armement de synchroniseur, constitué d'un ruban métallique replié sur lui-même, qui présente dans sa partie supérieure une protubérance centrale recevant la poussée des rampes d'armement du baladeur, et des parois latérales transmettant cette poussée sur toute l'épaisseur des anneaux de synchronisation.

La publication DE 1555 158, illustre un second type de ressort d'armement, recevant également la poussée des rampes d'armement du baladeur par une protubérance centrale orientée vers l'extérieur, mais muni en plus de bras latéraux déformables, dont les extrémités recourbées agrippent les deux anneaux du synchroniseur de façon à repousser un anneau contre un pignon, tout en entraînant l'autre anneau à l'écart de l'autre pignon.

Dans ces deux publications, les rampes d'armement sont disposées en arrière de la denture du baladeur, sous la partie centrale de celui-ci, de sorte que la poussée du baladeur est transmise au ressort d'armement par la partie centrale de ce dernier.

La présente invention vise à réaliser un dispositif de synchronisation particulier, dont les rampes d'armement du baladeur ne sont pas disposées dans la partie centrale de celui-ci, mais sur la face d'attaque de sa denture.

Elle propose des moyens d'armement compatibles avec ce type de rampes, et capables de donner à la commande la précision et l'élasticité souhaitées, tout en rappelant automatiquement les anneaux de synchronisation non sollicités en position de point-mort, afin de supprimer toute friction entre les surfaces de frottement de ces derniers, et les pignons correspondants.

Conformément à l'invention, ces moyens d'armement sont constitués par un ressort comportant des bras escamotables vers l'intérieur sous la poussée des rampes du baladeur, reliés à une partie centrale entrant en contact avec les anneaux de synchronisation de façon à pousser ces derniers en direction des pignons, et des pattes également reliées à ladite partie centrale, entraînant simultanément les anneaux non sollicités à l'écart des pignons.

De préférence, ce ressort d'armement présente des secteurs latéraux engagés sous des rebords du moyeu, de façon à assurer le guidage axial de l'élément d'armement sur celui-ci.

Sa partie centrale a par exemple la forme générale d'un U, dont les branches font face aux anneaux de synchronisation sur toute leur longueur.

D'autres caractéristiques et avantages de l'invention apparaîtront clairement à la lecture de la description suivante d'un mode de réalisation particulier de celle-ci, en liaison avec les dessins annexés, sur lesquels :
- la figure 1 est une coupe longitudinale d'un dispositif de synchronisation conforme à l'invention,
- la figure 2 est une vue en perspective du ressort d'armement proposé par l'invention,
- la figure 3 illustre le montage de ce ressort dans le synchroniseur, et
- la figure 4 met en évidence l'adaptation nécessaire des anneaux de synchronisation.

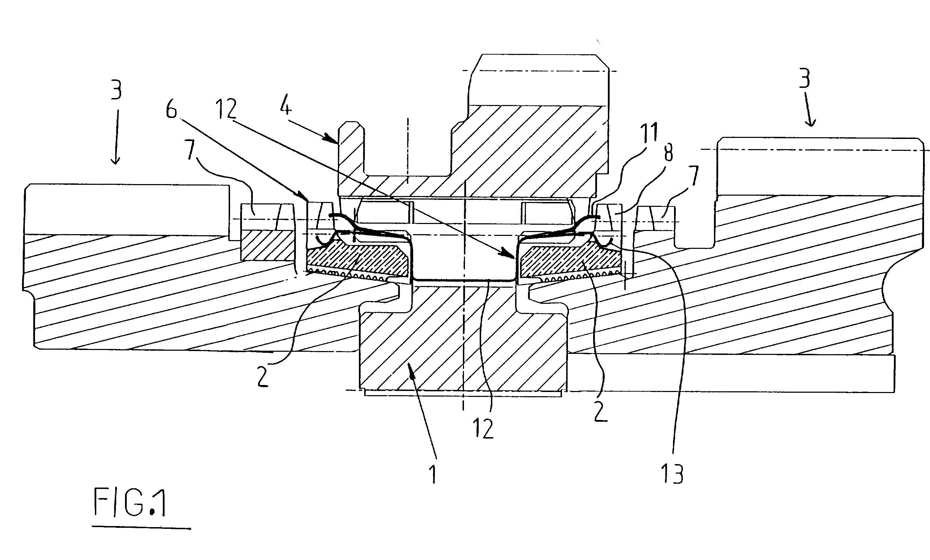

Sur la figure 1, on a représenté un dispositif de synchronisation, ou synchroniseur, comportant de façon classique un moyeu 1 solidaire d'un arbre rotatif (non représenté), tel que l'arbre secondaire d'une boîte de vitesses mécanique. Ce synchroniseur est un synchroniseur double, muni de deux anneaux de synchronisation 2 déplaçables respectivement en direction d'un premier et d'un second pignon de vitesse 3, pour engager deux rapports distincts sous la commande d'un baladeur 4, sollicité par l'intermédiaire d'un mécanisme de commande non représenté, à partir du levier de changement de vitesses du véhicule.

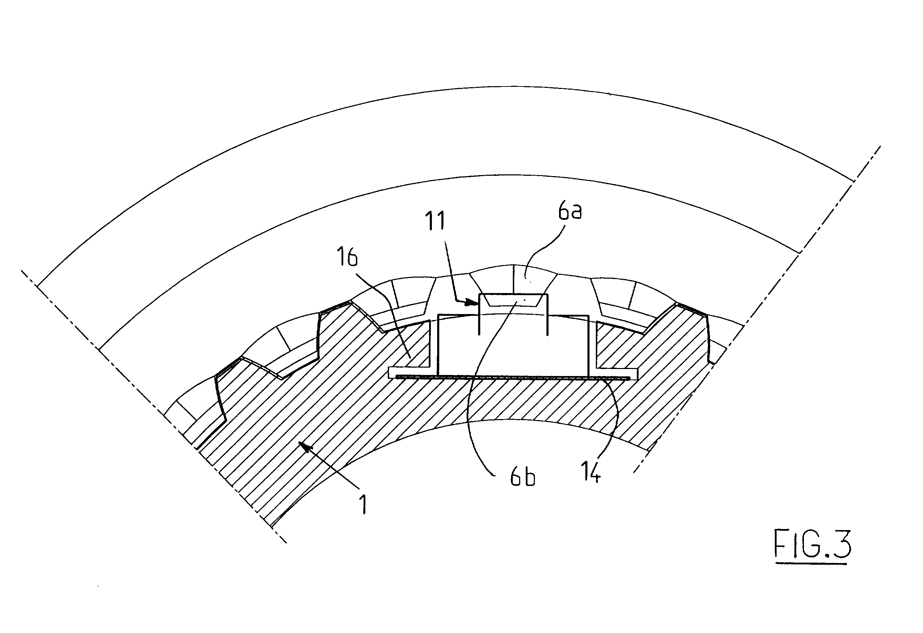

Le baladeur 4 présente deux dentures latérales 6, destinées à rencontrer les dentures 7 des pignons 3, après avoir traversé les dentures 8 des anneaux de synchronisation 2. Les dents 6 présentent sous leurs faces d'attaque 6a (mises en évidence sur la figure 3), des surfaces inclinées 6b constituant les rampes d'armement du baladeur, par lesquelles celui-ci transmet son effort de poussée au ressort d'armement 9.

La figure 1 montre que le ressort 9 présente des bras 11, reliés à une partie centrale 12, et des pattes 13, également reliées à celle-ci. Conformément à l'invention, les bras 11 sont escamotables vers l'intérieur sous la poussée des rampes 6b du baladeur 4. La partie centrale 12 du ressort 9 est celle qui entre en contact avec les anneaux de synchronisation 2, de façon à pousser ces derniers en direction des pignons 3, tandis que les pattes 13 ont pour fonction d'entraîner simultanément l'anneau non sollicité lors du passage de la vitesse, à l'écart du pignon qui lui fait face.

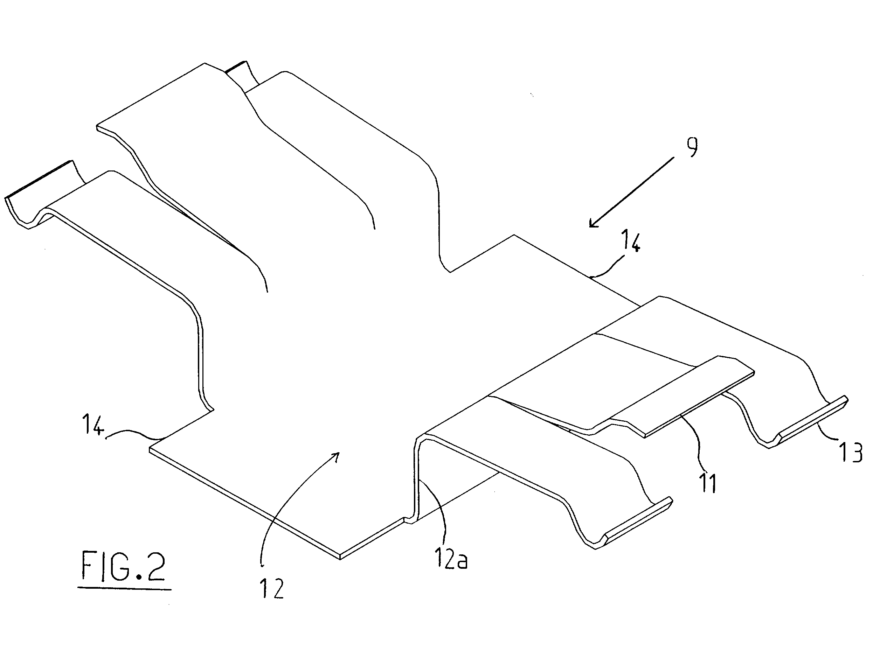

En se reportant à la figure 2, on reconnaît les bras escamotables 11, la partie centrale, 12, et les pattes d'entraînement 13 du ressort 9. Cette figure met en évidence la forme en U de la partie centrale 12 et le raccordement des bras escamotables 11 et des pattes 13 aux extrémités des branches 12a de ce U. Ces branches font face aux anneaux 2, de façon à transmettre sur toute leur longueur à ces derniers l'effort de poussée du baladeur. On note également que, dans l'exemple de réalisation non limitatif de l'invention illustré par cette figure, le ressort 9 présente de chaque côté de sa partie centrale 12, un seul bras 11, et deux pattes 13, situées de part et d'autre de celui-ci.

Par ailleurs, la figure 2 met en évidence que le ressort 9 présente des secteurs latéraux 14 engagés sous des rebords 16 du moyeu 1, mentionnés sur la figure 3. En se reportant à celle-ci, on comprend que les secteurs 14 assurent le guidage axial du ressort 9 sur le moyeu 1. Cette figure montre en outre la disposition des dents 6 du baladeur autour du moyeu 1, et l'appui des bras 11 sur les rampes 6b du baladeur 4.

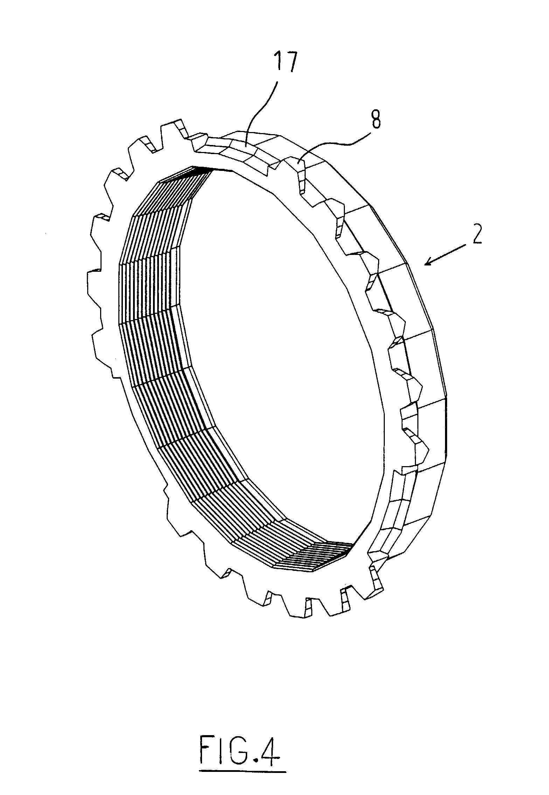

Enfin, la figure 4 fait apparaître le décrochement 17 de l'anneau 2, nécessaire à l'accrochage des pattes 13 sur celui-ci. Ce décrochement s'étend sur les secteurs non dentés (par exemple au nombre de trois) de cet anneau qui, sont disposés, lors du montage, en face de secteurs sans dents du moyeu, tels que celui de la figure 3.

En conclusion, l'invention permet d'assurer le déplacement des anneaux de synchronisation correspondant à la fonction d'armement à l'aide d'une pièce très simple à réaliser dans un matériau métallique souple, et d'un coût particulièrement réduit. Cet élément d'armement donne à la commande la précision et de l'élasticité souhaitées dans celle-ci. Grâce à sa forme particulière, et en particulier à ses secteurs latéraux engagés sous les rebords du moyeu, il se centre automatiquement sur le moyeu, sans risque d'échappement à l'intérieur de la boîte. Enfin, comme indiqué plus haut, le rappel des anneaux de synchronisation non sollicités en position de point-mort, permet de supprimer des frictions inutiles au sein de la transmission, et de réduire ainsi les phénomènes de «traînée» dans celle-ci.

## Revendications

1. Dispositif de synchronisation de pignons de boîte de vitesses, comportant un baladeur (4) coulissant sur un moyeu (1), muni de rampes d'armement (6b) repoussant par l'intermédiaire d'un élément d'armement (9) l'un ou l'autre de deux anneaux de synchronisation (2) vers un pignon (3) et de dentures (6) rencontrant la denture (7) de ce pignon après avoir traversé celle d'un anneau, caractérisé en ce que l'élément d'armement (9) présente des bras (11) escamotables vers l'intérieur recevant la poussée des rampes d'armement (6b), une partie centrale (12) reliée auxdits bras de façon à transmettre aux anneaux la poussée reçue par lesdits bras, et des pattes (13) également reliés à la partie centrale (12), qui entraînent simultanément les anneaux non sollicités à l'écart des pignons.

2. Dispositif de synchronisation selon la revendication 1, caractérisé en ce que les rampes (6b) sont situées sous les faces d'attaque (6a) des dents (6) du baladeur.

3. Dispositif de synchronisation selon la revendication 1 ou 2, caractérisé en ce que l'élément (9) présente des secteurs latéraux (14) engagés sous des rebords (16) du moyeu, de façon à assurer son guidage axial sur celui-ci.

4. Dispositif de synchronisation selon la revendication 1, 2 ou 3, caractérisé en ce que l'élément d'armement (9) présente un seul bras (11) de chaque côté de sa partie centrale (12).

5. Dispositif de synchronisation selon la revendication 4, caractérisé en ce que les pattes (13) sont situées de part et d'autres des bras (11).

6. Dispositif de synchronisation selon l'une des revendications précédentes, caractérisé en ce que la partie centrale (12) a la forme générale d'un U, dont les branches (12a) font face aux anneaux (2) sur toute leur longueur.

7. Dispositif de synchronisation selon la revendication 5, caractérisé en ce que les bras (11) et les pattes (13) sont raccordées à l'extrémité des branches (12a).

8. Ressort d'armement de synchroniseur comportant des bras (11) escamotables vers l'intérieur sous la poussée des rampes (6b) d'un baladeur de synchroniseur, reliés à une partie centrale (12) de ce ressort entrant en contact avec les anneaux de synchronisation (2) du synchroniseur de façon à pousser ces derniers en direction de pignons (3), et des pattes (13) reliées à la même partie centrale, entraînant simultanément les anneaux (2) non sollicités, à l'écart des pignons (3).

9. Ressort d'armement selon la revendication 8, caractérisé en ce que sa partie centrale (12) a la forme générale d'un U dont les branches (12a) font face aux anneaux (2), de façon à transmettre l'effort de poussée du baladeur sur toute leur longueur, et sont raccordées par leur extrémité aux bras (11) et aux pattes (13).

10. Ressort d'armement selon la revendication 9, caractérisé en ce qu'il présente des secteurs latéraux (14) engagés sous des rebords (16) du moyeu (1) supportant le baladeur (4), de façon à assurer son guidage axial sur celui-ci.
